# EUROPEAN PATENT SPECIFICATION

(11) **EP 1 786 849 B1**
(45) Date of publication and mention of the grant of the patent: **24.10.2007**
(21) Application number: 05772040.1
(22) Date of filing: 20.06.2005
(51) Int. Cl.: C08G 59/18, C08L 63/00, C08G 59/54

(54) **POLYAMINOAMIDE-MONOEPOXY ADDUCTS**
POLYAMINOAMIDMONOEPOXYADDUKTE
PRODUITS D'ADDITION A BASE DE POLYAMINOAMIDE-MONOEPOXYDE

(30) Priority: 21.06.2004 DE 102004029923
(43) Date of publication of application: 23.05.2007
(73) Proprietor: Huntsman Advanced Materials (Switzerland) GmbH, 4057 Basel (CH)
(72) Inventor: VOLLE, Jörg, 59379 Selm-Bork (DE); VOGEL, Michael, 79588 Efringen-Kirchen (DE)
(74) Representative: Hoffmann, Daniele
(86) International application number: PCT/EP2005/052856
(87) International publication number: WO 2005/123801

(56) References cited:
- WO-A-03/031495
- GB-A- 1 242 783
- US-A- 2 970 971
- US-A- 3 900 437

## Description

The invention relates to curing agents for epoxy resins, consisting of
A) a polyaminoamide adduct obtainable by reacting
   a1) a polyaminoamide containing imidazoline groups and prepared from
      a1-1) a polyethylenepolyamine having 3 or more nitrogen atoms in the molecule, and
      a1-2) a monofunctional fatty acid, with
   a2) a monofunctional, aromatic epoxide compound.

Curable compositions based on aminic curing agents and epoxy resins are widely used in industry for coating and enhancing metallic and mineral substrates, as adhesives and sealants, as matrix resins, as tooling resins or, very generally, as casting resins for producing mouldings or sheetlike structures. Aminic curing agents used are, in particular, aliphatic, cycloaliphatic or aromatic amines. The mechanical and physical properties of the curable compositions based on these amines on the substrate are sufficient for many applications.

In instances where it is necessary to use amine compounds of which a low volatility is expected, use is made of preadducts of such amines with epoxy resins. The advantages are a relatively low vapour pressure and hence also lower odour nuisance and toxicology. Since the free amine content of such compounds is still always very high, however, it is common to use what are known as "isolated adducts". In this case the excess of free amine is separated off (predominantly by distillation). The disadvantage of these compounds, however, is their viscosity, which is much too high. In order to be suitable for processing at room temperature and lower temperatures, fairly large proportions of diluents must be added. This, however, leads to a marked deterioration in the mechanical properties of the cured thermoset. For this reason, it is common to use amino amides which are prepared from long-chain fatty acids and polyamines, generally polyethylenepolyamines, by polycondensation. In practice, though, these products have disadvantages in many cases, such as poor surfaces or substantial formation of hydrates, for example. But these surface defects do not just cause visual disruption, as in the case of a topcoat, for example. The surface defects, particularly the formation of hydrates, may result in the situation in which, when the applied curable mixture, when used as a primer for example, is overcoated, the interply adhesion is inadequate and the subsequently applied topcoat undergoes redetachment.

The use of adducts of A) epoxy resins containing more than one epoxide group per molecule and B) polyaminoamides based on a) monobasic or polybasic fatty acids and b) polyfunctional amines is known from DE 1 520 918.

US 2,970,971 describes polyamide-epoxide compounds consisting of dimeric fatty acids and aliphatic monoepoxides.

The viscosity of these adducts, however, is frequently so high that it is necessary to add solvents in order to lower the viscosity of these adducts so that these products can be processed. The addition of solvents, however, leads on the one hand to a severe odour nuisance. In some cases these solvents are toxic or hazardous to health. The burden on the environment from the outgassing solvents is enormous. In technical terms, solvent that is present, particularly when thick layers are being applied, likewise causes problems; for example, in the case of primers, the remenance of solvent in the coating is disruptive and undesirable.

It was an object of the present invention, therefore, to provide hardeners for epoxy resins and curable compositions whose free amine content is comparatively low and which yet at the same time are of low viscosity at room temperature and can be processed without the addition of solvents and/or diluents, and for which the mechanical data of the cured thermosets are at a high level.

This object is achieved in accordance with the invention by the curing agents and curable compositions of the invention.

The invention accordingly first provides curing agents for epoxy resins, consisting of
A) a polyaminoamide adduct obtainable by reacting
   a1) a polyaminoamide containing imidazoline groups and prepared from
      a1-1) a polyethylenepolyamine having 3 or more nitrogen atoms in the molecule, and
      a1-2) a monofunctional fatty acid, with
   a2) a monofunctional, aromatic epoxide compound.

The adducts of the invention have comparatively low viscosities and enable processing at room temperature, so that there is no need to add disruptive solvents and/or plasticizers. The free amine content of these adducts is low.

Additionally the adducts of the invention exhibit outstanding adhesion to wet concrete surfaces. Hitherto it was often necessary to dry wet concrete surfaces prior to coating, in a laborious operation, in order to enable adhesion of the primer or coating. It has now been found that the curable compositions of the invention possess adhesion even on wet concrete, without prior drying.

In comparison to commercial hardeners, a processing life (potlife) is observed which is approximately comparable and also, surprisingly, a much quicker cure rate, especially at low temperatures (10°C). This could not have been foreseen. On the contrary, in conjunction with a long processing life, for instance, the expectation would have been of a slower cure rate as well, since normally the processing life is dependent on the cure rate.

The polyaminoamides containing imidazoline groups are prepared by conventional methods of condensation of polyethylenepolyamines and fatty acids. Polyethylenepolyamines used are those amines which contain 3 or more than 3 nitrogen atoms in the molecule, such as diethylenetriamine, triethylenetetramine, tetraethylenepentamine (TEPA), pentaethylenehexamine (PEHA), hexaethylheptamine (HEHA) and higher polyethylenepolyamines or polyethyleneamine mixtures. Preference is given to using triethylenetetramine, tetraethylenepentamine and/or pentaethylenehexamine.

The monomeric acids and/or fatty acids used for condensation with the polyethylenepolyamines are saturated or unsaturated and can contain hydrocarbon radicals having 2-22 carbon atoms. Inventively preferred are fatty acids containing at least 8 carbon atoms. Particular preference is given to monomeric, unsaturated fatty acids which contain at least 14 carbon atoms, such as oleic acid, tall oil fatty acid, linoleic acid and linolenic acid, for example.

To prepare the imidazole-containing polyaminoamides the polyethylenepolyamine is charged to the reaction vessel and the fatty acid is added at 60°C -100°C. The reaction mixture is heated to 260°C and the water of reaction formed is removed by distillation. A first condensation step produces a polyaminoamide which gives rise, in a second condensation step, with ring closure, to a polyaminoamide containing imidazoline groups. The degree of conversion of the second condensation step can be adjusted by way of the amount of water removed by distillation, and can amount to up to 90% with respect to the polyaminoamide of the first condensation step. The product in practice therefore comprises mixtures of at least 10 mol% polyaminoamide and not more than 90 mol% imidazoline-containing polyaminoamide. Inventively preferred are product mixtures which include more than 40% of the polyaminoamides containing imidazoline groups. The molar ratio of polyethylenepolyamine to acid groups is preferably from 1:1 to 1:1.5.

In accordance with the invention the monofunctional aromatic polyepoxides used for adducting the polyaminoamides containing imidazoline groups are glycidyl ethers, such as phenyl glycidyl ether, for example, but also aromatic glycidyl ethers containing alkyl chains, such as cresyl glycidyl ether, butylphenol glycidyl ether and nonylphenol glycidyl ether, for example. It is also possible, however, to use directly epoxidized, monofunctional, aromatic epoxides such as styrene oxide, for example. There is no need separately to mention that this enumeration is not complete and that in principle it is possible to use all monofunctional, aromatic epoxide compounds.

Preferred epoxide compounds a2) are phenyl glycidyl ether, cresyl glycidyl ether and butylphenol glycidyl ether.

In addition to the monofunctional, aromatic epoxide compounds used in accordance with the invention it is also possible to use other mono-, di- or polyfunctional epoxide compounds as well.

For the purpose of adducting, the imidazoline-containing polyaminoamide is introduced initially and heated to 60°C -100°C. The monofunctional, aromatic epoxide compound is added over the course of about 60 minutes. For complete reaction the mixture is subsequently stirred for 60 minutes. The level of adducting is chosen in accordance with the invention such that there are 0.01 to 2, preferably 0.2 to 1.5, epoxide equivalents of the monofunctional epoxide compound (a2) per mole of the imidazoline-containing polyaminoamide compound (a-1).

The invention further provides curable compositions comprising an epoxide compound, an inventive curing agent as hardener and, optionally, one or more additives and auxiliaries that are customary in epoxy resin chemistry.

The epoxide compounds used in accordance with the invention are commercially customary products having on average more than one epoxide group per molecule and deriving from mono- and/or polyhydric and/or polynuclear phenols, especially bisphenols and also novolaks, such as bisphenol A glycidyl ether and bisphenol F diglycidyl ether, for example. An extensive enumeration of these epoxide compounds is found in the handbook "Epoxidverbindungen und Epoxidharze" by A.M. Paquin, Springer Verlag Berlin, 1958, Chapter IV, and also in Lee & Neville, "Handbook of Epoxy Resins", 1967, Chapter 2. Compositions of two or more epoxide compounds can also be used.

Inventively preferred are compositions of glycidyl ethers based on bisphenol A, bisphenol F or novolaks with what are known as reactive diluents, such as monoglycidyl ethers of phenols, for example, or glycidyl ethers based on mono- or polyhydric aliphatic or cycloaliphatic alcohols. Examples of such reactive diluents include phenyl glycidyl ether, cresyl glycidyl ether, p-tert-butylphenyl glycidyl ether, butyl glycidyl ether, C₁₂-C₁₄ alcohol-glycidyl ethers, butane diglycidyl ether, hexane diglycidyl ether, cyclohexanedimethyl diglycidyl ether or glycidyl ethers based on polyethylene glycols or polypropylene glycols. If necessary these reactive diluents can be added in order to reduce further the viscosity of the epoxy resins.

The mixing ratio of inventive curing agent to epoxide compound is preferably chosen equivalently: that is, one epoxide equivalent is used per amine equivalent. In accordance with the intended use and desired end properties of the cured thermoset, however, it is possible to use a super- or substoichiometric amount of the inventive polyaminoamide adduct A) containing imidazoline groups.

This invention also provides for the use of the curable compositions of the invention for producing mouldings and sheetlike structures and also for applications in the adhesives and sealants sectors and for epoxy resin mortars.

The invention further provides the cured products obtainable by the curing of such a composition. The epoxy resins used are curable hot and cold (room temperature) with the inventive polyaminoamide adducts A) containing imidazoline groups.

The epoxy resins can be cured in the presence of further adjuvants, such as additives and auxiliaries commonplace in epoxy resin technology. Examples that may be mentioned include gravels, sands, silicates, graphite, silicon dioxide, talc, mica, etc., in the particle size distributions commonplace in this field. Additionally it is possible to use pigments, dyes, stabilizers, levelling agents, plasticizers, non-reactive extender resins, softeners and accelerators. The curable compositions may further comprise the curing agents customary in epoxy resin technology, especially aminic curing agents, as co-hardeners.

The compositions of the invention can be used very generally as casting resins for producing cured products, and can be used as a formulation adapted to the particular field of application, such as, for example, as adhesives, as matrix resins, as tooling resins or as coating materials.

The adducts of the invention are particularly suitable for applications as coating materials for wet concrete.

### Examples:

### Preparation of the polyaminoamides containing imidazole groups:

The polyethylenepolyamine is charged to a reaction vessel and is heated to about 60°C with stirring. At 60 to 100°C the fatty acid is added continuously over the course of 60 minutes. When the addition has been made the reaction mixture is heated to 260°C and the water of reaction formed is removed by distillation. The temperature is maintained for 2 hours. Subsequently the product is cooled to room temperature. The properties of the polyaminoamides containing imidazoline groups that are prepared in this way are shown in Table 1.

**Table 1:**

| Example | PEPA¹⁾; [g]; [mol] | Fatty acid ²⁾; [g]; [equivalent] | AN³⁾ | Visc./25°C [mPa·s] | approx. NHE ⁴⁾ |
|---|---|---|---|---|---|
| 1 | TEPA; 189, 1.0 | TFA; 280; 1.0 | 480 | 250 | 80 |
| 2 | TEPA; 180; 1.0 | TFA; 308; 1.1 | 460 | 410 | 100 |
| 3 | PEHA; 232; 1.0 | TFA; 280; 1.0 | 535 | 360 | 75 |
| 4 | TEPA; 189; 1.0 | LA; 280; 1.0 | 482 | 245 | 80 |
| 5 | TETA; 146; 1.0 | TFA; 280; 1.0 | 390 | 300 | 95 |

| | | | | | |
|---|---|---|---|---|---|
| **Key:** ¹⁾ PEPA = polyethylenepolyamine PEHA = pentaethylenehexamine TEPA = tetraethylenepentamine TETA = triethylenetetramine ²⁾ TFA = tall oil fatty acid LA = linolenic acid ³⁾ AN = amine number ⁴⁾ NHE = amine hydrogen equivalent | | | | | |

### Preparation of the adducts

A polyaminoamide of Examples 1-5, containing imidazole groups, is charged to the reaction vessel and heated to about 60°C. At 60°C-90°C the monofunctional, aromatic epoxide is added over the course of about 60 minutes. Stirring is continued at 60°C to 80°C for 60 minutes for complete reaction. 90% of the polyaminoamide adducts thus obtained is admixed in each case with 10% of the accelerator HY 960-1 (trisdimethylaminomethylphenol).

The properties of the accelerated adducts prepared in this way are shown in Table 2.

**Table 2:**

| Ex. | IAPAA¹); [g]; | Epoxide²); [g]; [eq.] | Visc./25°C [mPa·s] | Adducts [theor. amine eq.] |
|---|---|---|---|---|
| 6 | 1; 440 | A; 165; 1 | 1790 | approx. 135 |
| 7 | 3; 480 | C; 220; 1 | 1940 | approx. 130 |
| 8 | 4; 440 | C; 110; 0.5 | 1.150 | approx. 110 |
| 9 | 2; 470 | C; 110; 0.5 | 1050 | approx. 116 |
| 10 | 3; 480 | B; 180; 1 | 1860 | approx. 120 |
| 11 | 4; 440 | B; 180; 1 | 2150 | approx. 140 |
| 12 | 5; 360 | B; 180; 1 | 3000 | approx. 200 |
| 13 | Aradur 48 | (from Huntsman)³⁾ | 1000 | approx. 75 |
| 14 | Aradur 140 | (from Huntsman)³⁾ | 11000 | approx. 95 |
| 15 | Aradur 450 S | (from Huntsman)³⁾ | 1200 | approx. 115 |

| | | | | |
|---|---|---|---|---|
| **Key:** ¹⁾ IAPAA = imidazole-containing polyaminoamide as per example ²⁾ Epoxide = epoxide A = phenyl glycidyl ether (epoxide equivalent (EPE): approx. 165) = epoxide B = cresyl glycidyl ether (EPE: approx. 180); = epoxide C = butylphenol glycidyl ether (EPE: approx. 220) ³⁾ Aradur 140 = polyaminoamide formed from dimerized fatty acid and triethylenetetramine Aradur 48 = polyamine adduct in benzyl alcohol Aradur 450S= accelerated polyaminoamide adduct in benzyl alcohol | | | | |

### Use examples

The polyaminoamides/polyaminoamide adducts containing imidazoline groups that are listed in Table 2 are stirred homogeneously in equivalent amounts with the epoxy resin Araldite GY 783 (bisphenol A/F diglycidyl ethers, modified with a monofunctional, aliphatic reactive diluent; epoxide equivalent weight approx. 190, from Huntsman), and the adhesion to wet concrete is tested.

### Adhesion to wet concrete (tensile adhesive strength test)

The experimental setup described below for determining the tensile adhesive strength (TAS) was designed specifically for application on wet substrates, in order thus to simulate most similarly and realistically the on-site conditions.

### Preparation

Commercial concrete paving slabs are sand blasted. The concrete slabs are then stored fully in mains water at 10°C (for a minimum of 24 hours). The binder components are stored separately at 10°C.

### Priming/storage

The concrete plates are withdrawn and the excess water is removed using a soft cloth. The priming operation (corresponding binder and MR) encompasses the base and side surfaces of the concrete slab. Subsequent storage is for a period of 7 days in mains water at 10°C.

### Testing

On the seventh day the primed concrete slabs are withdrawn briefly at room temperature (RT) for drilling and pre-treatment (roughening and cleaning of the coating) for the application of the TAS die. The TAS dies (4 per concrete slab) are applied and fixed. The binder for bonding the TAS die is as follows: Araldite GY250 BD/Euredur 46S + 4% Aerosil R202.

The slabs are immediately then stored again at 10°C in mains water (duration: 20-24 hours). The tensile adhesive strength is tested by means of a TAS instrument (Herion model with a force increase of 100 N/s). The fracture pattern (concrete fracture/adhesion fracture) is assessed and the TAS results of the concrete substrate are recorded.

Results of 4 tensile tests each:

| Ex. | CF | AF | SH |
|---|---|---|---|
| 6 | 4 | 0 | 1 |
| 7 | 3 | 1 | 2 |
| 8 | 4 | 0 | 1 |
| 9 | 4 | 0 | 1 |
| 10 | 3 | 1 | 2 |
| 11 | 4 | 1 | 1 |
| 12 | 4 | 0 | 1 |
| 13 | 0 | 4 | 1 |
| 14 | 2 | 2 | 3 |
| 15 | 4 | 0 | 1-2 |

| | | | |
|---|---|---|---|
| Ex. = Example; CF = fracture in concrete; AF = fracture in adhesion area; SH = structure/hydrate formation, where 1 denotes no, 2 little, 3 moderate, 4 marked and 5 severe formation of hydrate. | | | |

### Use examples:

### Cure rate and processing life (potlife)

Shore hardness D at 10°C with the epoxy resin Araldite GY 783¹⁾

| Hardener | MR²⁾ | Shore D after x hours at 10°C x = | | | Gel time |
|---|---|---|---|---|---|
| | | 24h/ | 48 h/ | 72 h | |
| Example 6 | 60 | 30 *l* | 65 / | 75 | 71 min |
| Example 8 | 60 | 32/ | 68/ | 75 | 65 min |
| Example 10 | 60 | 35/ | 70 / | 76 | 55 min |
| Aradur 48 | 40 | n.m.³⁾/ | 51/ | 70 | 67 min |
| Aradur 450 S | 50 | 28/ | 55/ | 74 | 44 min |

| | | | | | |
|---|---|---|---|---|---|
| ¹⁾ Araldite GY 783 is a bisphenol A/bisphenol F resin blend modified with C12/C14 glycidyl ether and having a viscosity of approximately 1000 mPa·s (23°C) and an epoxide equivalent weight of approximately 190; ²⁾ MR = mixing ratio = grams of hardener per 100 grams of Araldite GY 783; ³⁾ n.m. = not measurable, on account of excessive softness | | | | | |

### Discussion of results:

All of the coatings of the curable compositions of the invention exhibit concrete fracture here in the majority; they can hence be classified as suitable.

Besides the outstanding adhesion to wet concrete, a very good level in the area of surface quality was found.

Particular mention may be made in this context of the resistance to structure/hydrate formation, since these features, in addition to the necessary wet compatibility, play a large part with respect to interply adhesion as well.

The cure rates of the curable compositions of the invention are very high at 10°C, while the processing lives are comparatively long. In direct comparison between the inventive examples and the comparative example as represented by Aradur 450 S, indeed, faster curing is seen in conjunction with a longer potlife. Curing behaviour of this kind is desirable in practice, since on the one hand the processor has sufficient time to apply the curable mixture and on the other hand, in the coating sector for example, the coating can be rapidly walked on or worked on. This result was not foreseeable. The expectation, with a faster cure rate, would have been of a comparatively short processing life.

## Claims

1. Curing agent for epoxy resins, consisting of
A) a polyaminoamide adduct obtainable by reacting
a1) a polyaminoamide containing imidazoline groups and prepared from
a1-1) a polyethylenepolyamine having 3 or more nitrogen atoms in the molecule, and
a1-2) a monofunctional fatty acid, with
a2) a monofunctional, aromatic epoxide compound.

2. Curing agent according to Claim 1, **characterized in that** component a1-1) is selected from triethylenetetramine, tetraethylenepentamine and/or pentaethylenehexamine.

3. Curing agent according to Claim 1, **characterized in that** component a1-2) is a fatty acid containing at least 8 carbon atoms.

4. Curing agent according to Claim 3, **characterized in that** component a1-2) is an unsaturated, monomeric fatty acid containing at least 14 carbon atoms.

5. Curing agent according to Claim 1, **characterized in that** one mole of the polyethylenepolyamine a1-1) is reacted with 1.0 to 1.5 mol of the fatty acid a1-2).

6. Curing agent according to Claim 1, **characterized in that** in the reaction to form the polyaminoamide adducts A) there are 0.01 to 2, preferably 0.2 to 1.2, epoxide equivalents of component a2) per mole of component a1).

7. Curing agent according to Claim 1, **characterized in that** the epoxide compound a2) is phenyl glycidyl ether, cresyl glycidyl ether or butylphenol glycidyl ether.

8. Curable composition comprising an epoxide compound, a curing agent according to Claim 1 and optionally auxiliaries and additives.

9. Curable composition according to Claim 8, **characterized in that** the epoxide compound is a bisphenol glycidyl ether or epoxy novolak.

10. Curable composition according to Claim 8, **characterized in that** the epoxide compound has been diluted with a reactive diluent.

11. Use of a curable composition according to Claim 8 as an adhesive, matrix resin, tooling resin or coating material.

12. Cured product obtainable by curing a composition according to Claim 8.

## Patentansprüche

1. Härtungsmittel für Epoxyharze, bestehend aus:
A) einem Polyaminoamid-Addukt, das erhältlich ist durch Umsetzen
a1) eines Polyaminoamids, das Imidazolingruppen enthält und hergestellt ist aus
a1-1) einem Polyethylenpolyamin mit 3 oder mehr Stickstoffatomen im Molekül; und
a1-2) einer monofunktionellen Fettsäure; mit
a2) einer monofunktionellen, aromatischen Epoxidverbindung.

2. Härtungsmittel gemäß Anspruch 1, **dadurch gekennzeichnet, dass** Komponente a1-1) aus Triethylentetramin, Tetraethylenpentamin und/oder Pentaethylenhexamin ausgewählt ist.

3. Härtungsmittel gemäß Anspruch 1, **dadurch gekennzeichnet, dass** Komponente a1-2) eine Fettsäure ist, die wenigstens 8 Kohlenstoffatome enthält.

4. Härtungsmittel gemäß Anspruch 3, **dadurch gekennzeichnet, dass** Komponente a1-2) eine ungesättigte, monomere Fettsäure ist, die wenigstens 14 Kohlenstoffatome enthält.

5. Härtungsmittel gemäß Anspruch 1, **dadurch gekennzeichnet, dass** 1 mol des Polyethylenpolyamins a1-1) mit 1,0 bis 1,5 mol der Fettsäure a1-2) umgesetzt wird.

6. Härtungsmittel gemäß Anspruch 1, **dadurch gekennzeichnet, dass** bei der Reaktion zur Bildung der Polyaminoamid-Addukte A) 0,01 bis 2, vorzugsweise 0,2 bis 1,2, Epoxid-Äquivalente von Komponente a2) pro Mol Komponente a1) verwendet werden.

7. Härtungsmittel gemäß Anspruch 1, **dadurch gekennzeichnet, dass** es sich bei der Epoxidverbindung a2) um Phenylglycidylether, Kresylglycidylether oder Butylphenolglycidylether handelt.

8. Härtbare Zusammensetzung, die eine Epoxidverbindung, ein Härtungsmittel gemäß Anspruch 1 und gegebenenfalls Hilfsstoffe und Additive umfasst.

9. Härtbare Zusammensetzung gemäß Anspruch 8, **dadurch gekennzeichnet, dass** die Epoxidverbindung ein Bisphenolglycidylether oder ein Epoxynovolak ist.

10. Härtbare Zusammensetzung gemäß Anspruch 8, **dadurch gekennzeichnet, dass** die Epoxidverbindung mit einem reaktiven Verdünnungsmittel verdünnt ist.

11. Verwendung einer härtbaren Zusammensetzung gemäß Anspruch 8 als Kleber, Matrixharz, Werkzeugharz oder Beschichtungsmaterial.

12. Gehärtetes Produkt, das durch Härten einer Zusammensetzung gemäß Anspruch 8 erhältlich ist.

## Revendications

1. Agent de durcissement pour résines époxy, constitué de :
A) un produit d'addition de polyaminoamide pouvant être obtenu par mise en réaction de
a1) un polyaminoamide contenant des groupes imidazoline et préparé à partir de
a1-1) une polyéthylènepolyamine ayant 3 ou plus de 3 atomes d'azote dans la molécule et
a1-2) un acide gras monofonctionnel, avec
a2) un composé époxyde aromatique monofonctionnel.

2. Agent de durcissement selon la revendication 1, **caractérisé en ce que** le composant a1-1) est choisi parmi les triéthylènetétramine, tétraéthylènepentamine et/ou pentaéthylènehexamine.

3. Agent de durcissement selon la revendication 1, **caractérisé en ce que** le composant a1-2) est un acide gras contenant au moins 8 atomes de carbone.

4. Agent de durcissement selon la revendication 3, **caractérisé en ce que** le composant a1-2) est un acide gras monomère insaturé contenant au moins 14 atomes de carbone.

5. Agent de durcissement selon la revendication 1, **caractérisé en ce qu'**une mole de la polyéthylènepolyamine a1-1) est mise en réaction avec 1,0 à 1,5 mole de l'acide gras a1-2).

6. Agent de durcissement selon la revendication 1, **caractérisé en ce que**, dans la réaction pour former les produits d'addition de polyaminoamide A), il y a de 0,01 à 2, de préférence de 0,2 à 1,2 équivalent d'époxyde du composant a2) par mole de composant a1).

7. Agent de durcissement selon la revendication 1, **caractérisé en ce que** le composé époxyde a2) est de l'éther phénylglycidylique, de l'éther crésylglycidylique ou de l'éther glycidylique de butylphénol.

8. Composition durcissable comprenant un composé époxyde, un agent de durcissement selon la revendication 1 et éventuellement des auxiliaires et des additifs.

9. Composition durcissable selon la revendication 8, **caractérisée en ce que** le composé époxyde est de l'éther glycidylique de bisphénol ou une résine époxy de type novolaque.

10. Composition durcissable selon la revendication 8, **caractérisée en ce que** le composé époxyde est dilué avec un diluant réactif.

11. Utilisation d'une composition durcissable selon la revendication 8 en tant qu'adhésif, résine matricielle, résine d'outillage ou matériau de revêtement.

12. Produit durci pouvant être obtenu par durcissement d'une composition selon la revendication 8.
